# FASCICULE DE BREVET EUROPEEN

(11) **EP 0 855 209 B1**
(45) Date de publication et mention de la délivrance du brevet: **18.10.2006**
(21) Numéro de dépôt: 98400075.2
(22) Date de dépôt: 16.01.1998
(51) Int. Cl.: B01D 53/047, B01J 20/18

(54) **Procédé psa de purification de l'hydrogène**
Druckwechseladsorptionsverfahren zur Wasserstoffreinigung
PSA process for purifying hydrogen

(30) Priorité: 24.01.1997 FR 9700784
(43) Date de publication de la demande: 29.07.1998
(73) Titulaire: CECA S.A., 92800 Puteaux (FR)
(72) Inventeur: Plee, Dominique, 64140 Lons (FR)
(74) Mandataire: Treuil, Claude

(56) Documents cités:
- EP-A- 0 667 183
- US-A- 4 859 217
- US-A- 5 266 102
- US-A- 5 268 023

## Description

L'invention a pour objet un procédé pour adsorber sélectivement les impuretés présentes dans les flux gazeux, particulièrement ceux qui sont constitués en grande majorité par de l'hydrogène.

Plus spécifiquement, l'invention a trait à l'utilisation d'adsorbants obtenus par échanges au lithium des zéolites du type faujasite et plus particulièrement encore, parmi celles-ci, des zéolites à faible rapport Si/AI.

La purification de l'hydrogène par adsorption est un procédé industriel de grande importance. Il s'agit de récupérer l'hydrogène à partir d'un mélange de plusieurs constituants provenant du réformage catalytique du gaz naturel, des installations de production d'ammoniac ou des unités d'éthylène. On applique le principe de l'adsorption modulée en pression (ci-après PSA, mis pour Pressure Swing Adsorption) pour obtenir de l'hydrogène de haute pureté. Dans la pratique, pour mettre en oeuvre un procédé PSA, on envoie le gaz à épurer sur un lit d'adsorbant à pression élevée, étape pendant laquelle les impuretés s'adsorbent sélectivement sur l'adsorbant. Lorsque celui-ci est saturé, on effectue une purge, puis une désorption par baisse de la pression. L'adsorbant étant ainsi régénéré, on opère une recompression pour ramener le système dans les conditions initiales. Ce type de procédé, exception faite des effets thermiques induits par l'adsorption et la désorption des molécules, est pratiquement isotherme et s'avère très intéressant du point de vue énergétique.

Les impuretés sont le plus souvent constituées de CO₂, NH₃, N₂, CO, CH₄ et d'hydrocarbures en C₁-C₄, à des teneurs allant de quelques ppm à quelques pour-cent. Dans la pratique, on emploie un lit composé d'alumine ou de gel de silice pour retenir l'eau, de charbon actif pour retenir CO₂ et CH₄ et de tamis moléculaire pour piéger CO et N₂.

La première installation industrielle, qui date de 1967, est décrite par UCC dans US 3,430,418, et jusqu'à présent, l'adsorbant zéolitique utilisé est un tamis moléculaire de type 5A. Les zéolites dont il est question ici ont la structure faujasite dont on peut trouver une description dans "HANDBOOK OF MOLECULAR SIEVES" de R. SZOSTAK, édition VAN NORSTRAND REINHOLD, 1992. De manière générale, les zéolites sont des solides cristallisés dont le réseau cristallin est formé par la condensation de tétraèdres, généralement siliciques et aluminiques, au moyen d'oxygènes pontants. Dans certains cas, les tétraèdres peuvent contenir d'autres éléments tels que bore, gallium, titane, vanadium, fer, à la place de l'aluminium, et essentiellement du phosphore en substitution partielle ou totale du silicium. Il est également possible de préparer des zéolites ne contenant que de l'oxyde de silicium. Ces produits sont chimiquement analogues aux silices (quartz ou cristobalite), mais possèdent la caractéristique principale des zéolites à savoir une porosité parfaitement calibrée et régulière. Il est possible d'ajuster la proportion de silicium et d'aluminium dans une structure donnée : on peut ainsi préparer la faujasite pour des rapports Si/AI compris entre 1 et 4. Selon les types de zéolites, les tailles de pores vont de 0,3 à 0,8 nm (3Å à 8Å) pour les solides formés par condensation de tétraèdres silicium et aluminium. On connaît des structures microporeuses de type aluminophosphates présentant des pores de taille plus grande, aux alentours de 1,2 nm (12Å). Certaines structures zéolitiques ne possèdent qu'un seul type d'ouverture de pores tandis que d'autres présentent deux, voire trois réseaux poreux différents, se croisant ou non à l'intérieur du cristal. Ces caractéristiques très variées ouvrent aux zéolites de nombreuses possibilités d'usage dans des domaines aussi divers que l'échange d'ions, la catalyse ou l'adsorption.

On peut interpréter l'introduction d'aluminium dans le réseau cristallin comme une substitution du silicium tétravalent par un élément moins chargé, en l'occurrence trivalent. Le nombre d'atomes d'oxygènes et donc de charges négatives restant constant, on provoque l'apparition d'une charge négative pour chaque atome d'aluminium introduit. L'équilibre des charges est alors assuré par l'insertion d'ions compensateurs de charge tels que les alcalins ou les alcalino-terreux. Ces cations sont susceptibles de s'échanger en solution, ce qui apporte certaines propriétés spécifiques au solide: ainsi, une zéolite A, sous forme sodique, a une ouverture de pores de 0,4 nm. Echangée au calcium, la taille de ses pores augmente légèrement à 0,5 nm, ce qui modifie les propriétés de l'adsorbant. Celui-ci devient alors capable d'adsorber les paraffines normales, en excluant les paraffines branchées plus volumineuses. L'échange de la zéolite A au potassium réduit au contraire la taille de pores à 0,3 nm, ce qui ne permet à cette zéolite de n'adsorber que l'eau ou l'ammoniac.

L'utilisation de ces adsorbants est donc potentiellement prometteuse dans l'application PSA H₂. Il est curieux de constater que la littérature est relativement pauvre quant aux adsorbants utilisables. MITSUBISHI signale dans sa demande japonaise JP 01080418 la zéolite de type X échangée au calcium pour adsorber le monoxyde de carbone. Des études concernant l'influence du potentiel électrostatique du cation sur les propriétés d'adsorption de CO ont été menées par BOSE et coll. (Proc. 6^{th} Int. Zeolite Conf., p. 201, 1983). Elles ont montré que le sens décroissant des énergies pour la zéolite A était:

Mg<Ca<Li<Na,

ce qui est l'ordre décroissant des rapports charge / taille.

Dans certains systèmes, les auteurs préconisent des adsorbants capables d'adsorber très sélectivement CO tout en minimisant l'adsorption de N₂ ou de CO₂ (EP-A-224150, NIPPON KOKAN KABUSHIKI KAISHA). Ceci est obtenu par échange puis imprégnation au moyen d'un sel de cuivre d'une zéolite de type Y ou ZSM5 : on pense que l'espèce active est le cuivre monovalent qui se forme en conditions réductrices et permet la formation de liaisons entre les électrons π du CO et une orbitale d vide du cuivre. Néanmoins, ces adsorbants ont la particularité de mal se régénérer en conditions PSA du fait des très fortes énergies mises en jeu. L'amélioration des procédés d'adsorption reste donc un objectif important, soit pour diminuer la taille des installations, soit pour abaisser les coûts de fonctionnement.

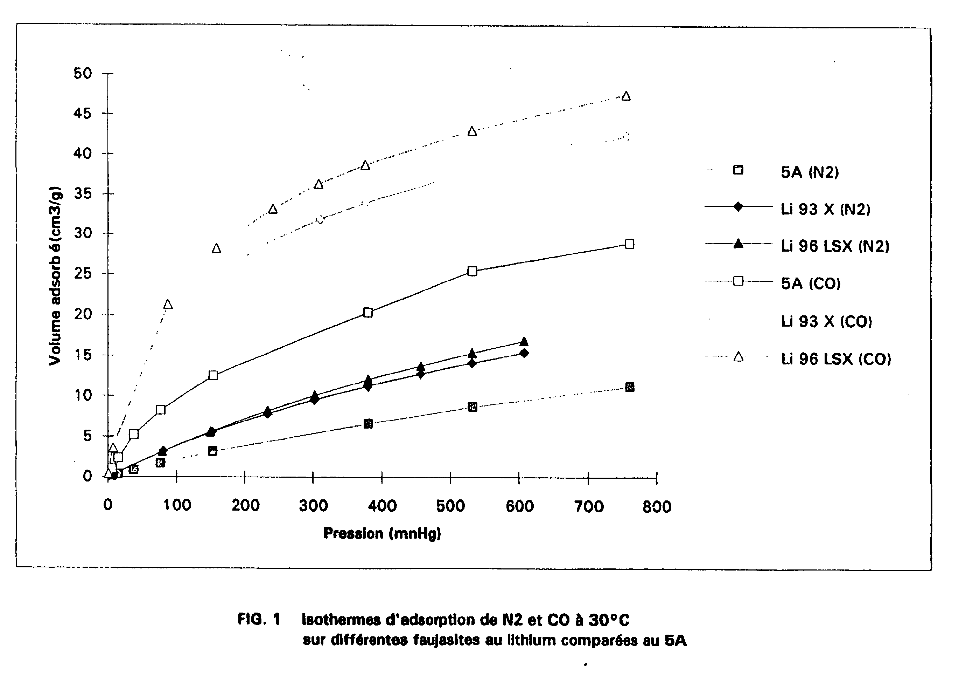

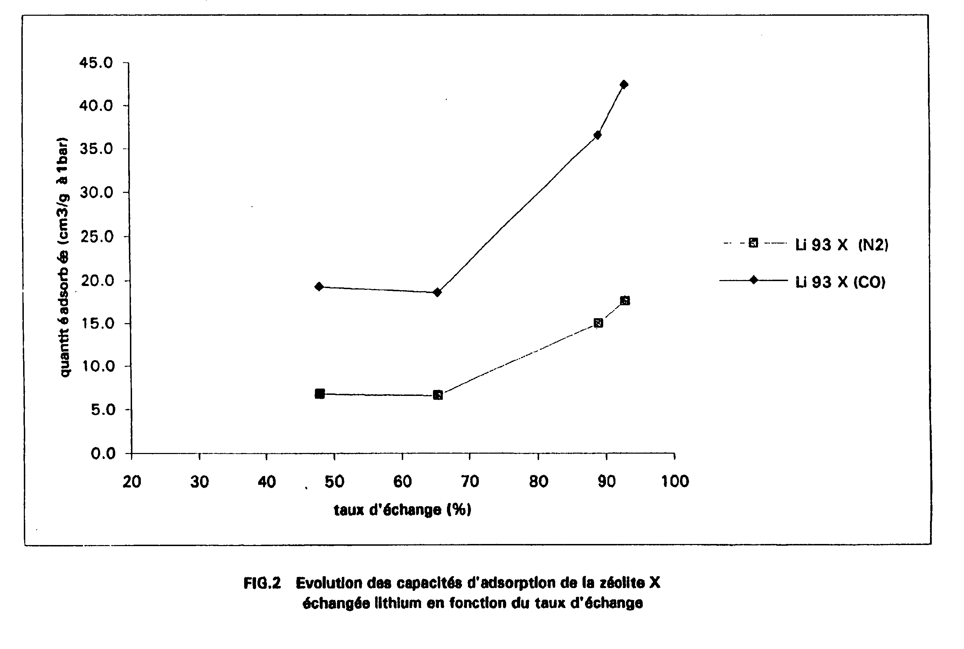

La demanderesse a découvert que la forme lithium des zéolites de type faujasite dans lesquelles le rapport Si/AI du réseau va de 1 à 3, de préférence de 1 à 1,5 constitue une classe d'adsorbants très supérieurs aux adsorbants jusqu'à présent utilisés pour purifier l'hydrogène des impuretés qu'il contient, essentiellement le monoxyde de carbone et l'azote. Ces adsorbants ont des capacités d'adsorption de CO et de N₂ particulièrement importantes et ont l'avantage sur les adsorbants de type faujasite échangée avec des ions calcium de présenter des isothermes plus linéaires, ce qui est favorable pour l'application en PSA. La figure 1 reproduit l'isotherme d'adsorption de CO et de N₂ d'une faujasite lithium de rapport Si/AI égal à 1 comparée à une zéolite 5A couramment utilisée dans les PSA H2, et la figure 2 représente l'évolution de la capacité d'adsorption de CO en fonction du taux d'échange lithium de l'adsorbant. Ces produits sont déjà connus de l'homme de l'art et ont été revendiqués dans l'application PSA / VSA O₂ (US 4,859,217 du 22/08/1989). Il n'en reste pas moins que jusqu'à présent, personne n'avait songé à les employer pour purifier un courant d'hydrogène contenant des quantités de CO et N₂ qui peuvent être comprises entre 0,5 % et 4 %.

La demanderesse a en outre constaté que ces faujasites de rapport Si/AI 1 à 3 dont une partie importante des sites d'échange est occupée par des cations lithium, restent performantes pour la purification de l'hydrogène quand les sites restants, c'est-à-dire les sites échangeables non occupés par du lithium, sont occupés par des cations alcalins ou alcalino-terreux autres, de préférence par le calcium, pour autant que le rapport du lithium aux autres ions alcalins ou alcalino-terreux, en particulier le calcium, soit au moins de 70 %. La demanderesse a vérifié que cette particularité est restreinte aux structures de type faujasite qu'elle a relevées, et que l'échange de la zéolite A par du lithium ou des mélanges lithium /calcium n'apporte pas d'amélioration particulière des capacités d'adsorption de CO et N₂.

La présente invention consiste ainsi en un perfectionnement des procédés PSA pour l'obtention d'hydrogène purifié à partir de mélanges gazeux contenant outre l'hydrogène, de l'oxyde de carbone et/ou de l'azote, le perfectionnement consistant en ce que l'adsorbant du procédé est une faujasite dont le rapport Si/AI a une valeur de 1 à 3, préférentiellement 1 à 1,5, et dans le réseau de laquelle 85% au moins des tétraèdres aluminiques sont associés à des cations lithium et calcium, le rapport lithium / lithium + calcium étant au moins de 70 %, le reste de la capacité d'échange, soit au plus 15 %, étant occupé par des ions alcalins autres que le lithium ou des ions alcalino-terreux autres que le calcium, ions qui sont en général issus de la synthèse (Na et K). Les faujasites de type LSX, c'est-à-dire les faujasites dont le rapport Si/AI est égal à l'unité, (les écarts à l'unité traduisant soit la contamination du produit par de faibles quantités de zéolites à rapport Si/AI différent, soit l'imprécision expérimentale sur l'estimation du rapport Si/AI), sont tout particulièrement performantes.

Les adsorbants moyens de l'invention s'utilisent très simplement au lieu et place des absorbants de l'art antérieur et ne nécessitent aucune modification substantielle des installations PSA actuelles.

Les exemples suivants illustrent l'invention. On y a représenté les diverses zéolites expérimentées par des symboles du type CaₙLiₘZ, dans lesquels les indices suivant l'élément chimique indiquent son taux d'échange, et les lettres Z repèrent le type de la zéolite.

### EXEMPLE 1 : préparation d'une faujasite LSX.

On prépare une zéolite de type faujasite à rapport Si/AI = 1 (faujasite LSX) en mélangeant à température ambiante une solution d'aluminate de sodium et de potassium et une solution de silicate de sodium. La solution d'aluminate est préparée par dissolution à 110-115°C de 15,6 g d'alumine trihydrate de type gibbsite dans une solution composée de 100 ml d'eau, 33,68 g de soude en pastilles et 17,92 g de potasse en pastilles. Après dissolution, la solution est refroidie à une température de 20°C et complétée par de l'eau pour compenser les pertes dues à l'évaporation.

La solution de silicate est constituée de 100 ml d'eau et de 47,05 g de silicate de soude (25,5 % SiO₂ ; 7,75 % Na₂O). Après mélange homogène des deux solutions que l'on peut obtenir par différents moyens connus de l'homme de l'art, on opère un mûrissement de 30 heures à 50°C suivi d'une cristallisation à 95°C pendant 3 heures. Le solide récupéré est filtré puis lavé avec environ 15 ml/ g au moyen d'eau distillée ; après séchage à 80°C, une partie du solide est calcinée à une température de 550°C sous air pendant 2 heures. Sa capacité d'adsorption de toluène est mesurée sous 50 % de pression partielle et à 25°C. On trouve une valeur de 22,5 % en poids, indicatrice d'une bonne cristallinité. La maille cristalline, telle que déterminée par analyse chimique, s'écrit : K₂ Na₇₄ (Si₉₆ Al₉₆) O₃₈₄, est celle d'une LSX .

### EXEMPLE 2

On effectue un échange ionique d'une zéolite X de rapport Si/Al= 1,25, avec une valeur d'adsorption de toluène égale à 23,2 %, au moyen d'une solution de chlorure de lithium 1 M/l à 80°C. Le lithium introduit dans la solution correspond à 157 % de la capacité d'échange. Après échange, le produit est lavé avec 10 ml d'eau distillée contenant 10⁻⁴ mole/l d'hydroxyde de lithium par gramme de zéolite.

La même opération est effectuée en doublant le nombre d'échanges. Les solides obtenus appelés respectivement Li₄₈X et Li₆₅X ont des taux d'échanges exprimés par Li₂O/Li₂O + Na₂O de 48 % et 65 %

On effectue des opérations d'échanges sur la même zéolite X de base avec une solution de chlorure de lithium 4M/l à 80°C en utilisant un rapport liquide/solide de 10 ml/g. Les produits obtenus Li₈₉X et Li₉₃X ont subi respectivement trois et quatre échanges et leurs taux d'échanges sont de 89 % et 93 %.

### EXEMPLE 3

On mesure les capacités d'adsorption de CO et d'azote à 30°C après avoir calciné sous air les solides préparés dans l'exemple 2 à 550°C pendant 2 heures, puis les avoir dégazés sous vide à 300°C. Les résultats sont reportés ci-dessous, d'une part en capacités d'adsorption des deux gaz à 1 bar de pression, et d'autre part, en rapports des capacités à 1 bar et à 0,2 bar, ce qui apporte une information sur la courbure de l'isotherme. Les données sont comparées aux valeurs que l'on peut obtenir sur un tamis moléculaire 5A industriel à taux d'échange calcique de 75-85 %. La colonne Li % contient les valeurs du taux d'échange en lithium (Li₂O)/(Li₂O + Na₂O).

| | Li % | CO(1bar) (mmoles/g) | CO(1bar) / CO(0,2bar) | N₂(1bar) (mmoles/g) | N₂(1bar) / N₂(0,2bar) |
|---|---|---|---|---|---|
| Li₄₈X | 48 | 0,86 | 2,81 | 0,31 | 4,93 |
| Li₆₅X | 65 | 0,83 | 2,83 | 0,29 | 4,71 |
| Li₈₉X | 89 | 1,64 | 2,45 | 0,67 | 3,26 |
| Li₉₃X | 93 | 1,90 | 1,71 | 0,78 | 3,14 |
| 5A ind. | - | 1,38 | 2,4 | 0,53 | 3,68 |

Au vu de ces chiffres, les zéolites de type faujasite échangées au lithium présentent, à partir d'un taux d'échange que l'on peut estimer à 80-85 %, une capacité d'adsorption d'azote et de monoxyde de carbone supérieure à ce que l'on obtiendrait avec une zéolite 5A.

### EXEMPLE 4

On procède à l'échange de la zéolite LSX décrite à l'exemple 1 au moyen d'une solution de chlorure de lithium 1 M/l à 80°C. Le lithium introduit dans la solution correspond à 145 % de la stoechiométrie d'échange. Après échange, le produit est lavé avec 10 ml d'eau distillée contenant 10⁻⁴ mole/l d'hydroxyde de lithium par gramme de zéolite.

On effectue la même opération en doublant le nombre d'échanges. Les solides obtenus, dénommés respectivement Li₄₂LSX et Li₇₄LSX, ont des taux d'échanges de 42 et 74 %.

On procède ensuite sur la même poudre de LSX à une série d'échanges à partir d'une solution de chlorure de lithium 4M/l. La stoechiométrie au premier échange est égale à 58,2 % de la capacité d'échange. On obtient ainsi les solides Li₉₁LSX et Li₉₆LSX dont les taux d'échange sont respectivement de 91 et 96,7 %.

Après lavage et séchage dans des conditions identiques à celles des Li₄₂LSX et Li₇₄LSX, les adsorbants sont calcinés à 550°C sous air pendant 2 heures, puis dégazés sous vide à 300°C. On mesure alors leur capacité d'adsorption d'azote et de monoxyde de carbone à 30°C. Les résultats sont repris dans le tableau ci-après dans lequel on a porté les capacités à 1 bar pour les deux gaz ainsi que les rapports desdites capacités entre les pressions de 1 bar et de 0,2 bar. On inclut aussi pour comparaison les données concernant un tamis 5A industriel et la zéolite LSX de départ non échangée.

| | Li % | CO (1bar) (mmoles/g) | CO(1bar) / CO(0,2bar) | N2(1bar) (mmoles/g) | N2(1bar) / N2(0,2bar) |
|---|---|---|---|---|---|
| LSX | - | 0,63 | 4,26 | 0,24 | 4,9 |
| Li₄₂LSX | 42 | 0,66 | 4 | 0,25 | 4,67 |
| Li₇₄LSX | 74 | 0,94 | 2,93 | 0,35 | 4,39 |
| Li₉₁LSX | 91 | 1,8 | 1,86 | 0,87 | 3,49 |
| Li₉₆LSX | 96,7 | 2,12 | 1,69 | 1 | 3,48 |
| 5A ind. | - | 1,38 | 2,4 | 0,53 | 3,68 |

Comme pour la faujasite X, la zéolite LSX présente des capacités d'adsorption d'azote et de monoxyde de carbone supérieures à celles de la zéolite 5A.

### EXEMPLE 5

Afin de démontrer que cet effet est bien spécifique aux zéolites de type faujasite, on a effectué des échanges lithium sur zéolite de type A, avec une solution de chlorure de lithium 1 M/l, à la température d'échange de 80°C. La stoechiométrie de la solution, visée pour le premier échange est de 143 %. Après deux heures d'échange, le solide est filtré, lavé avec une solution à 10⁻⁴ mole/l d'hydroxyde de lithium dans l'eau distillée à raison de 10 ml de solution par gramme de zéolite. On procède ensuite à un deuxième puis à un troisième échange dans des conditions identiques. Les solides obtenus sont dénommés respectivement Li₃₅A, Li₅₇A et Li₇₄A et présentent des taux d'échange de 35,57 et 74,5 %.

On effectue, comme dans les exemples précédents, une calcination à 550°C sous air pendant deux heures et on mesure ensuite les capacités d'adsorption d'azote et de monoxyde de carbone à 30°C après dégazage sous vide à 300°C. Les résultats sont résumés dans le tableau suivant, dans lequel on inclut également les données correspondant à une zéolite 4A non échangé au lithium.

| | Li % | CO(1 bar) (mmoles/g) | CO(1 bar) / CO(0,2bar) | N₂(1bar) (mmoles/g) | N₂(1 bar) / N₂(0,2bar) |
|---|---|---|---|---|---|
| Zéolite 4A | | 1,03 | 3,66 | 0,34 | 4,63 |
| Li₃₅A | 35 | 1,13 | 3,33 | 0,34 | 4,75 |
| Li₅₇A | 57 | 1,03 | 3,71 | 0,31 | 4,67 |
| Li₇₄A | 74 | 0,91 | 3,92 | 0,28 | 4,77 |

II apparaît clairement que les capacités pour les deux gaz considérés n'augmentent pas en fonction du taux d'échange contrairement à ce qui est observé pour les zéolites de type faujasite. Eu égard au rapport entre les capacités à 1 et 0,2 bar, elles n'évoluent pas non plus de manière très significative.

### EXEMPLE 6

Dans cet exemple, on évalue le comportement de zéolites de type LSX, échangées calcium et lithium afin de déterminer une éventuelle différence de propriétés par rapport à la forme sodium + lithium ou par rapport à la forme calcium + sodium. Pour ce faire, on traite le solide Li₉₁LSX au moyen d'une solution de chlorure de calcium 0,23 M/l pendant une heure à 70°C. La quantité de calcium introduite représente 20 % de la capacité d'échange de la zéolite. Une fois l'opération effectuée, on filtre et lave avec 10 ml d'eau par gramme de zéolite. Parallèlement, on échange la zéolite de l'exemple 1 au moyen d'une solution de chlorure de calcium 1,5 M/l à 70°C pendant deux heures. La quantité introduite représente 153 % de la stoechiométrie. On filtre et on lave ensuite le solide avec 10 ml d'eau par gramme de zéolite. On répète alors l'échange dans les mêmes conditions et l'on obtient un solide dont le taux d'échange est de 84 %, le taux d'échange du solide obtenu à partir de Li₉₁ LSX se répartissant ainsi:
- 69 % lithium
- 22 % calcium
- 25 % sodium + potassium

Ce solide présente donc un taux d'échange global calcium + lithium de 91 % avec un rapport Li/Li+Ca de 76%. On compare ses propriétés en adsorption à celles de Li₉₁LSX.

Le tableau ci-dessous, fournit les valeurs d'adsorption de monoxyde de carbone et d'azote après prétraitements analogues à ceux des exemples précédents sur ces deux adsorbants, ainsi que sur la CaLSX précédemment citée.

| | CO(1 bar) (mmoles/g) | CO(1bar) / CO(0,2bar) | N₂(1 bar) (mmoles/g) | N2(1 bar) / N2(0,2bar) |
|---|---|---|---|---|
| Ca₈₄LSX | 1,47 | 1,49 | 1,04 | 2,33 |
| Ca₂₂Li₆₉LSX | 1,8 | 1,8 | 0,85 | 3,40 |
| Li₉₁LSX | 1,8 | 1,86 | 0,87 | 3,49 |

Ces résultats montrent que l'adsorbant échangé mixte calcium et lithium se comporte comme un tamis lithium de même taux d'échange global. Il n'y a pas suffisamment d'ions calcium pour induire les effets (courbure d'isothermes importante) que l'on observe avec le solide échangé à 84 %.

### EXEMPLE 7

On compare dans cet exemple, les propriétés d'adsorption de zéolite 4A échangée, soit au calcium seul, soit au moyen de calcium et de lithium. On obtient, après des traitements qui s'apparentent à ceux de l'exemple précédent, trois solides dont la somme des taux d'échange calcium + lithium est pratiquement constante :
Ca₇₆A Calcium = 76 %
Ca₇₀Li₁₀A Calcium = 69,7 % Lithium = 10,2 %
Ca₄₀Li₃₇A Calcium = 40,3 % Lithium = 36,6 %

Le tableau ci-dessous résume les valeurs d'adsorption de monoxyde de carbone et d'azote à 30°C, après les étapes de dégazage décrites dans les exemples précédents.

| | CO(1bar) (mmoles/g) | CO(1bar) / CO(0,2bar) | N₂(1bar) (mmoles/g) | N₂(1bar) / N₂(0,2bar) |
|---|---|---|---|---|
| Ca₇₆A | 1,25 | 2,36 | 0,52 | 3,3 |
| Ca₇₀Li₁₀A | 1,3 | 2,36 | 0,52 | 3,7 |
| Ca₄₀Li₃₇A | 1,27 | 2,25 | 0,52 | 3,23 |

On remarque donc, que dans une large gamme de taux d'échange mixte calcium + lithium, l'adsorbant constitué de zéolite A se comporte comme un tamis ne contenant comme cation principal que du calcium. Contrairement à l'exemple précédent, on conclut que les propriétés d'adsorption d'une zéolite A ayant en position d'échange du calcium et du lithium, seront identiques à celles de mélanges physiques de zéolite échangée au lithium et de zéolite échangée au calcium.

## Revendications

1. Procédé PSA pour l'obtention d'hydrogène purifié à partir de mélanges gazeux contenant outre l'hydrogène, du monoyde de carbone et/ou de l'azote, **caractérisé en ce que** l'adsorbant dudit procédé est une faujasite dont le rapport Si/Al une valeur de 1 à 3, et dans le réseau cristallin de laquelle 85% au moins des tétraèdres aluminiques sont associés à la fois à des cations lithium et calcium, le rapport lithium / lithium + calcium étant au moins de 70 %.

2. Procédé selon la revendication 1, **caractérisé en ce que** l'adsorbant du procédé est une faujasite dont le rapport Si/Al a une valeur de 1 à 1,5

3. Procédé selon les revendications 1 ou 2, **caractérisé en ce que** la faujasite est une faujasite LSX, c'est-à-dire de rapport Si/AI égal à 1.

## Claims

1. PSA process for obtaining purified hydrogen from gas mixtures containing, apart from hydrogen, carbon monoxide and/or nitrogen, **characterized in that** the adsorbent for said process is a faujasite, the Si/Al ratio of which has a value ranging from 1 to 3, and in the crystal lattice of which faujasite at least 85% of the alumina tetrahedra are associated both with lithium and calcium cations, the lithium/lithium + calcium ratio being at least 70%.

2. Process according to Claim 1, **characterized in that** the adsorbent for the process is a faujasite, the Si/Al ratio of which has a value ranging from 1 to 1.5.

3. Process according to either of Claims 1 and 2, **characterized in that** the faujasite is an LSX faujasite, that is to say having an Si/Al ratio equal to 1.

## Patentansprüche

1. SPA-Verfahren zur Herstellung von gereinigtem Wasserstoff aus Gasgemischen, die außer Wasserstoff Kohlenmonoxid und/oder Stickstoff enthalten, **dadurch gekennzeichnet, dass** das Adsorptionsmittel des Verfahrens ein Faujasit ist, dessen Verhältnis Si/Al einen Wert von 1 bis 3 aufweist, und in dessen kristallinem Netz mindestens 85 % der aluminischen Tetraeder sowohl mit Lithium- als auch Kalziumkationen verbunden sind, wobei das Verhältnis Lithium/Lithium + Kalzium mindestens 70 % beträgt.

2. Verfahren nach Anspruch 1, **dadurch gekennzeichnet, dass** das Adsorptionsmittel des Verfahrens ein Faujasit ist, dessen Verhältnis Si/Al einen Wert von 1 bis 1,5 aufweist.

3. Verfahren nach den Ansprüchen 1 oder 2, **dadurch gekennzeichnet, dass** das Faujasit ein Faujasit LSX ist, d.h. das Verhältnis Si/Al gleich 1 ist.
